# EUROPÄISCHE PATENTSCHRIFT

(11) **EP 0 703 267 B1**
(45) Veröffentlichungstag und Bekanntmachung des Hinweises auf die Patenterteilung: **28.03.2001**
(21) Anmeldenummer: 95112763.8
(22) Anmeldetag: 14.08.1995
(51) Int. Cl.: C08J 7/06

(54) **Polyacetylenhaltige Formkörper**
Shaped articles conferring polyacetylene
Articles faconnés contenant du polyacétylène

(30) Priorität: 25.08.1994 DE 4430097
(43) Veröffentlichungstag der Anmeldung: 27.03.1996
(73) Patentinhaber: BAYER AG, 51368 Leverkusen (DE)
(72) Erfinder: Ostoja Starzewski, Karl-Heinz Aleksander, Dr., D-61118 Bad Vilbel (DE)

(56) Entgegenhaltungen:
- EP-A- 0 311 432
- EP-A- 0 374 626
- DATABASE WPI Derwent Publications Ltd., London, GB; AN 85-313746[50] & JP-A-60 218 661 (CANON KK.) 1. November 1985
- Römpp, Chemie Lexikon, 9. Auflage, Band 2, Seite 1,576.

## Beschreibung

Die Erfindung betrifft polyacetylenhaltige Polymerprodukte, die sich durch verbesserte Stabilität gegenüber Luft und insbesondere Sauerstoff auszeichnen.

Aus der EP-A-0 374 626 ist bereits bekannt geworden, daß polyacetylenhaltige Polarisatoren durch Laminierung mit diversen Polymerfolien und auch Glas mechanisch und chemisch, etwa zum Schutz vor Atmosphärilien, stabilisiert werden können.

Polyacetylenhaltige Polymerprodukte sind aus US 4 769 422 bekannt. Sie eignen sich z.B. als elektrische Leiter und Halbleiter auf organischer Basis. Gegenüber reinem Polyacetylen lassen sie sich leicht zu Formkörpern, beispielsweise Folien oder Fasern verarbeiten. Sie sind stabiler als reines Polyacetylen. Bei erhöhter Temperatur sind sie jedoch empfindlich gegenüber Sauerstoff.

Ihre Herstellung ist z.B. in US 4 769 422 beschrieben. Dabei wird Acetylen in organischer Lösung mindestens eines von Polyacetylen verschiedenen Polymeren und in Gegenwart bestimmter Nickel (0)-Komplexe polymerisiert. Das entstehende polyacetylenhaltige Polymerprodukt kann 0,1 bis 99 Gew.-%, vorzugsweise 1 bis 50 Gew.-% Polyacetylen enthalten.

Als von Polyacetylen verschiedenes Polymer kommen alle löslichen Polymere in Frage, z.B. Polystyrol, Polycarbonat, Polyvinylchlorid, Polychloropren, Polyether, Polyacrylnitril, Polyvinylpyrrolidon, Polyisopren, Polyvinylalkohol, Cellulose-Derivate, z.B. Methylcellulose und Mischpolymerisate wie Acrylnitril-Copolymere, Butadien-Acrylnitril-Copolymere, die hydriert sein können, oder Acrylnitril(Meth)-acrylat-Copolymere. Als Lösungsmittel werden die für die genannten Polymere geeigneten Lösungsmittel eingesetzt.

Bevorzugt sind Polymere mit polaren Gruppen, beispielsweise Halogenatomen, Nitrilgruppen, Hydroxylgruppen, Acetylgruppen oder Carbonestergruppen, z.B. Polyvinylchlorid, Polyvinylalkohol, Polyvinylbutyral, Polyacrylnitril und Acrylnitril enthaltende Copolymere sowie Polyvinylpyrrolidon, Polyvinylcarbazol, Methylcellulose.

Als Lösungsmittel werden vorzugsweise polare aprotische Substanzen gewählt, z.B. Dimethylformamid und Dimethylsulfoxid.

Die polyacetylenhaltigen Polymerprodukte zeigen makroskopisch entweder eine heterogene oder eine homogene Polyacetylenverteilung in der Polymermatrix. Die heterogene Verteilung äußert sich durch diskrete schwarze Teilchen von Polyacetylen in der Polymermatrix, allerdings in hochdisperser Verteilung. Die homogene Verteilung äußert sich durch eine durchgehend gelb-braune, rote bis tiefblaue Färbung des Polymerproduktes.

Alle polyacetylenhaltigen Polymerprodukte lassen sich ohne Verlust ihrer optischen und elektrischen Eigenschaften in üblicher Weise zu Formkörpern, beispielsweise Fäden oder Folien verarbeiten. Dabei kann das Polyacetylen auch in orientierter Form vorliegen.

Die elektrischen Eigenschaften ändern sich bei längerer Lagerung nicht.

Das Polyacetylen kann in üblicher Weise, beispielsweise mit Iod, dotiert werden. Durch die Dotierung läßt sich die elektrische Leitfähigkeit nach Bedarf etwa bis zu zehn Zehnerpotenzen steigern, wodurch die Produkte für einen weiten Anwendungsbereich vom Nichtleiter über den Halbleiter bis zum elektrischen Leiter einsetzbar werden. Der formale Dotierungsgrad ergibt sich aus der Gewichtszunahme durch die Iodierung.

Erfindungsgemäß werden die Formkörper der polyacetylenhaltigen Polymerprodukte mit einer Silikatschicht versehen. Dies geschieht insbesondere dadurch, daß die genannten Formkörper in eine wäßrige Lösung von Natron- oder Kaliwasserglas getaucht und anschließend getrocknet werden. Dabei führen schon extrem dünne Schichten zu einer hervorragenden Stabilisierung des Polyacetylens gegenüber Sauerstoff, z.B. bereits Schichten von etwa 1 µm. Vorzugsweise werden 50 mg bis 2 g Wasserglas (Feststoff) benötigt, um 1 m² Oberfläche des Formkörpers zu stabilisieren. Die Formkörperoberfläche kann vorzugsweise zuvor mit einem Silan oder einem Borat behandelt worden sein, wobei diese Behandlung mit so geringen Mengen durchgeführt wird, daß eine Gewichtszunahme praktisch nicht feststellbar ist.

Auch bei dieser Vorbehandlung wird der Formkörper kurz in die Lösung eines Silans oder eines Borates getaucht und getrocknet, wobei bei flüssigen Silanen auch ein Eintauchen in die reine Verbindung möglich ist.

Geeignete Silane sind z.B. Tetramethoxysilan und Tetraethoxysilan. Geeignete Borate sind Borsäure und Borax.

Der stabilisierende Effekt der Silikat-Beschichtung läßt sich in einem Wärmetest, der an der Luft durchgeführt wird, nachweisen.

Zu diesem Zweck werden dünne transparente Schichten von Matrixpolyacetylenen erzeugt und deren Absorptionsspektren vor und nach der thermischen Belastung gemessen.

### Beispiele

### Beispiel 1 (PVPPAC)

In einem ausgeheizten 250 ml 4-Halskolben, der mit Innenthermometer, Argon- und Acetylengaszuführung und Überdruckventil ausgestattet war, wurden unter Argon-Schutzgasatmosphäre 5 g Polyvinylpyrrolidon (PVP) in 95 g trockenem Dimethylformamid (DMF) während 30 Minuten bei ca. 60°C unter magnetischer Rührung gelöst. Bei 60°C wurden dann 0,5 mmol Katalysator [NiPh(Ph₂PCHCPhO)(i-Pr₃PCHPh)] gelöst in 3 ml DMF injiziert und 1 Minute eingerührt (Ph = Phenyl; i-Pr = Isopropyl). Anschließend wurde in schnellem Strom 30 Sekunden Acetylengas durch die Lösung geleitet, welche sich blauschwarz färbte. Unumgesetztes Acetylen wurde durch einen starken Argonstrom verdrängt.

Die PVPPAC-Lösung wurde mit DMF im Verhältnis 1:1 verdünnt. Durch senkrechtes Eintauchen in diese Lösung und Trocknen an der Luft wurden Objektträger aus Glas beschichtet und die Lichtabsorption im sichtbaren Wellenlängenbereich gemessen. Weitere Messungen wurden nach thermischer Belastung auf 90°C an der Luft durchgeführt. Dabei fällt die Extinktion, und das Absorptionsmaximum verschiebt sich zu kürzerer Wellenlänge. Die Farbe der klaren Lackschicht verändert sich von blau nach rötlich.

| t (90°C) | E^{max} | λ^{max} |
|---|---|---|
| 0 min | 2,83 | 642 nm |
| 60 min | 2,36 | 588 nm |
| 120 min | 2,09 | 562 nm |

### Beispiel 2 (PVPPAC, Silikat)

Es wurde entsprechend Beispiel 1 verfahren, nach Erzeugung der Lackschicht wurde jedoch zuerst ca. 2 Minuten in Tetraethoxysilan getaucht, getrocknet und danach kurz in wäßrige Natrium-Silikat-Lösung getaucht und getrocknet. Das Absorptionsspektrum war nun nach der 2-stündigen Wärmebehandlung unverändert.

### Beispiel 3 (Me-CELPAC)

Es wurde entsprechend Beispiel 1 verfahren, wobei jedoch 2,5 g Methylcellulose in 97,5 g DMF während 1 Stunde gelöst wurde und 0,25 mmol Katalysator eingesetzt wurde. Die blauschwarze Me-CELPAC-Lösung wurde direkt, d.h. ohne weitere Verdünnung zur Tauchlackierung eingesetzt. Nach 2-stündiger Temperatur-Belastung bei 90°C war die Extinktion von 3,89 auf 2,46 gefallen und das Absorptionsmaximum hatte sich von 707 nm auf 601 nm verschoben.

### Beispiel 4 (Me-CELPAC, Silikat)

Eine tauchlackierte Glasplatte aus Beispiel 3 wurde gemäß Beispiel 2 nachbehandelt. Im 4-stündigen 90°C-Wärmetest änderte sich das Absorptionsspektrum nicht.

### Beispiel 5 (PANPAC)

Es wurde entsprechend Beispiel 3 verfahren, wobei als Matrixpolymer Polyacrylnitril verwendet wurde. Die blauschwarze PANPAC-Reaktionslösung wurde direkt für die Tauchlackierung verwendet.

Nach 4-stündiger 90°C-Belastung war die Extinktion der beidseitig PANPAC-beschichteten Glasplatte von 1,95 auf 1,32 abgefallen; das Absorptionsmaximum hatte sich von 663 nm auf 550 nm verschoben und die Farbe war von blau nach rötlich umgeschlagen.

### Beispiel 6 (PANPAC, Silikat)

Eine tauchlackierte Glasplatte aus Beispiel 5 wurde gemäß Beispiel 2 nachbehandelt. Die Absorptionsspektren änderten sich im 4-stündigen Wärmetest nicht. Entsprechend blieb die Farbe des Lackes blau.

### Beispiel 7 (PANPAC, Silikat)

Eine gemäß Beispiel 6 erzeugte Probe wurde 10 Tage bei 90°C gehalten, wobei Farbe und Spektrum unverändert blieben.

## Patentansprüche

1. Formkörper aus polyacetylenhaltigen Polymerprodukten und einem von Polyacetylen verschiedenen Polymer, dadurch gekennzeichnet, daß sie eine Schutzschicht, die aus Natrium- oder Kaliumsilikat besteht, enthalten.

2. Formkörper nach Patentanspruch 1, dadurch gekennzeichnet, daß das Polyacetylen 0,1 bis 99 Gew.-% der Summe aus Polyacetylen und von Polyacetylen verschiedenem Polymer ausmacht.

3. Formkörper nach Patentanspruch 1, dadurch gekennzeichnet, daß das Polyacetylen 1 bis 50 Gew.-% der Summe aus Polyacetylen und von Polyacetylen verschiedenem Polymer ausmacht.

4. Formkörper nach Patentanspruch 1, dadurch gekennzeichnet, daß die Schutzschicht aus Silikat durch Aufbringen von Natron- oder Kaliwasserglas erzeugt wird.

5. Formkörper nach Patentanspruch 1, dadurch gekennzeichnet, daß die Silikatschutzschicht 50 mg bis 2 g Wasserglas (Feststoff) pro m² Oberfläche des Formkörpers ausmacht.

6. Formkörper nach Patentanspruch 1, dadurch gekennzeichnet, daß zwischen polyacetylenhaltigem Polymerprodukt und Silikatschutzschicht wenigstens eine weitere Schicht angeordnet ist.

## Claims

1. Mouldings made from polyacetylene-containing polymer products and a polymer other than polyacetylene, characterized in that they have a protective coating of sodium silicate or potassium silicate.

2. Mouldings according to Claim 1, characterized in that the polyacetylene makes up from 0.1 to 99% by weight of the total amount of polyacetylene and the polymer other than polyacetylene.

3. Mouldings according to Claim 1, characterized in that the polyacetylene makes up from 1 to 50% by weight of the total amount of polyacetylene and the polymer other than polyacetylene.

4. Mouldings according to Claim 1, characterized in that the protective coating of silicate is produced by applying sodium water glass or potassium water glass.

5. Mouldings according to Claim 1, characterized in that the silicate protective coating is produced using from 50 mg to 2 g of water glass (solid) per m² of surface of the moulding.

6. Mouldings according to Claim 1, characterized in that at least one further layer is arranged between the polyacetylene-containing polymer product and the silicate protective coating.

## Revendications

1. Corps moulés constitués de produits polymères contenant du polyacétylène et d'un polymère différent du polyacétylène, caractérisés en ce qu'ils contiennent une couche protectrice qui est constituée de silicate de sodium ou de potassium.

2. Corps moulés selon la revendication 1, caractérisés en ce que le polyacétylène correspond à de 0,1 à 99% en poids de la somme du polyacétylène et du polymère différent du polyacétylène.

3. Corps moulés selon la revendication 1, caractérisés en ce que le polyacétylène correspond à de 1 à 50% en poids de la somme du polyacétylène et du polymère différent du polyacétylène.

4. Corps moulés selon la revendication 1, caractérisés en ce que la couche protectrice constituée de silicate est produite par application de silicate de sodium ou de potassium.

5. Corps moulés selon la revendication 1, caractérisés en ce que la couche protectrice de silicate correspond à de 50 mg à 2 g de verre soluble (matière solide) par m² de surface du corps moulé.

6. Corps moulés selon la revendication 1, caractérisés en ce qu'il est disposé au moins une autre couche entre le produit polymère contenant du polyacétylène et la couche protectrice de silicate.
